# EUROPÄISCHE PATENTSCHRIFT

(11) **EP 1 647 356 B1**
(45) Veröffentlichungstag und Bekanntmachung des Hinweises auf die Patenterteilung: **17.10.2007**
(21) Anmeldenummer: 05019945.4
(22) Anmeldetag: 14.09.2005
(51) Int. Cl.: B23Q 7/16, B23Q 3/00, B65G 47/252

(54) **Transportelement zum Transportieren beziehungsweise Einziehen eines Rahmenelementes**
Transport element for transporting and/or pulling of an element of a frame
Elément de transport pour le transport ou l'introduction d'un élément de cadre

(30) Priorität: 15.10.2004 DE 102004050521
(43) Veröffentlichungstag der Anmeldung: 19.04.2006
(73) Patentinhaber: ROTOX GmbH B. EISENBACH, 56858 Grenderich (DE)
(72) Erfinder: Eisenbach, Bernd, 65611 Brechen (DE); Schön, Christoph, 65606 Villmar-Aumenau (DE)
(74) Vertreter: Müller, Eckhard

(56) Entgegenhaltungen:
- EP-A- 0 429 417
- DE-A1- 4 232 289
- DE-A1- 19 652 942

## Beschreibung

Die Erfindung betrifft ein Transportelement zum Transportieren, insbesondere zum Einziehen, eines Rahmenelementes, wie beispielsweise eines Fenster- oder Türrahmens, von einer Ausgangsstellung unter Ausübung einer Drehbewegung in eine Endstellung, beispielsweise an einer Vorrichtung zum Bearbeiten des Rahmenelementes, wobei das Transportelement mit seiner Kontaktfläche bei der Transportbewegung zur Anlage an einer Inneneckfläche des Rahmenelementes gelangt.

### Stand der Technik

Ein derartiges Transportelement ist beispielsweise aus der DE 42 32 289 A1 bekannt und dient zum Transportieren eines Rahmens von einer Ausgangstellung auf einem Transporttisch in eine Bearbeitungsstellung an einer Eckenputzmaschine. Da der Rahmen in der Bearbeitungsstellung eine gegenüber der Ausgangsstellung verdrehte Position einnimmt, erfolgt mittels des Transportelementes bei der Transportbewegung auch eine Drehbewegung des Rahmens. Dabei gelangt das Transportelement in Kontakt mit dem Inneneck des Rahmens, um den Rahmen von seiner Transportausgangslage, in welcher sich die Rahmenlängs- oder -querseiten in Transportrichtung erstrecken, unter Ausübung einer Drehbewegung in eine diagonale Bearbeitungsstellung in der Eckenputzmaschine zu verschwenken. In dieser Bearbeitungsposition erfolgt eine Innen- und Außenbearbeitung des Fenster- oder Türrahmens, um beispielsweise die beim Verschweißen der das jeweilige Rahmenende bildenden Kunststoffschenkel entstandenen Schweißraupen abzutragen. Danach wird der Rahmen wieder zurückgeschwenkt, um das nächste Rahmeneck zu bearbeiten. Um eine möglichst geringe Zeit bei der Bearbeitung eines Fenster- oder Türrahmens zu erreichen, werden die Rahmen mit hohen Geschwindigkeiten von ihrer Ausgangsstellung in die Bearbeitungsstellung und zurück verfahren beziehungsweise verschwenkt. Dabei werden Beschleunigungswerte von 0,5 Meter pro Sekunde und mehr erreicht. Demgemäß greifen beim Transport hohe Kräfte an dem Rahmeneck an. Da es bei der Drehbewegung des Rahmens zu einer Relativbewegung zwischen Rahmen und Transportelement kommt, können sich aufgrund der hohen Transportkräfte Verformungen beziehungsweise Impressionen an dem Rahmen im Kontaktbereich des Transportelementes bilden. Insbesondere bei Kunststofffenster- oder -türrahmen mit an der Innenseite abgerundeten Kanten kann es auch zu Abplatzungen kommen .

Ein Transportelement zum Einziehen eines aus Kunststoffprofilen hergestellten Fenster- oder Türrahmens in eine Arbeitsstation ist auch aus der DE 690 08 120 T2 bekannt. Das Transportelement weist einen kreisförmigen Querschnitt auf und greift an der jeweiligen Innenecke des Rahmens an.

### Aufgabenstellung

Davon ausgehend liegt der Erfindung die Aufgabe zugrunde, ein Transportelement der eingangs genannten Art bereit zu stellen, bei welchem Beschädigungen an dem Rahmen im Anlagebereich des Transportelementes weitgehend vermieden werden.

### Erfindung und vorteilhafte Wirkungen

Diese Aufgabe wird erfindungsgemäß dadurch gelöst, dass das Transportelement bei der Transportbewegung unter Beibehaltung der Anlagestellung mit dem Rahmenelement mitdreht. Durch diese Maßnahme wird eine Relativbewegung zwischen dem Transportelement und dem Rahmenelement während der Transportbewegung vermieden, so dass die ansonsten durch die Relativbewegung hervorgerufenen Impressionen oder Beschädigungen am Rahmenelement im Anlagebereich beziehungsweise Kontaktbereich des Transportelementes nicht mehr entstehen. Damit ermöglicht das erfindungsgemäße Transportelement einen rahmenschonenden Transport, insbesondere auch bei relativ schweren Rahmen und/oder hohen Beschleunigungen des Rahmens während der Transportbewegung.

Nach einer ersten Ausgestaltung der Erfindung ist es vorgesehen, dass das Transportelement einen etwa kreisförmigen Querschnitt aufweist. Ein derartiger Querschnitt eignet sich insbesondere für nicht-rechteckförmige oder -quadratische Rahmen, welche als die das jeweilige Rahmeneck bildende Rahmenschenkel in einem stumpfen oder spitzen Winkel aufeinander zulaufen.

Für rechteckförmige oder quadratische Rahmenschenkel empfiehlt es sich nach der Erfindung, dass das Transportelement einen im wesentlichen quadratischen Querschnitt aufweist. Dadurch ergeben sich größere Kontaktflächen beziehungsweise Anlageflächen zwischen Transportelement und dem Rahmen als bei einem kreisrunden Querschnitt, so dass die von dem Transportelement auf den Anlagebereich des Rahmens ausgeübte Flächenpressung erheblich verringert ist, um Beschädigungen, wie Verformungen, Impressionen und dergleichen an dem Rahmen weitestgehend zu vermeiden. Als Kontaktfläche beziehungsweise Anlagefläche wird vorliegend auch eine Linienberührung verstanden.

Vorzugsweise sollte der quadratische Querschnitt abgerundete Kanten aufweisen. Sie ermöglichen ein schonendes Gleiten des Transportelementes in die Mitnahmestellung am Rahmeninneneck.

Eine weitere vorteilhafte Ausgestaltung der Erfindung sieht eine Rückstelleinrichtung vor, durch welche das Transportelement bei einem Aufheben der Anlagestellung mit dem Rahmenelement in seine Ausgangsdrehstellung zurückgedreht wird. Dadurch kann eine definierte und gleichbleibende Drehstellung des Transportelementes zu Beginn eines jeden Transportvorganges eingehalten werden. Dies ist besonders bei Transportelementen mit einem im wesentlichen quadratischen Querschnitt relevant, da durch die Rückstelleinrichtung das Transportelement bereits beim Annähern an das Rahmenelement mit seinen Kontaktflächen beziehungsweise Anlageflächen parallel zu den Anlageflächen am Inneneck des Rahmenelementes ausgerichtet werden kann. Damit kann auf schonende Art und Weise ein Kontakt des Transportelementes mit dem Inneneck des Rahmenelementes realisiert werden.

In die gleiche Richtung zielt eine weitere vorteilhafte Ausgestaltung der Erfindung, bei der Anschlagmittel zum Begrenzen des Verdrehwinkels des Transportelementes in die eine und die andere Richtung vorgesehen sind.

Nach einem Gedanken der Erfindung ist es vorgesehen, dass das Transportelement im Anlagebereich mit dem Rahmenelement eine im wesentlichen glatte Beschichtung oder dergleichen reibungsarme Oberfläche aufweist, wodurch ein Verfahren des zu bearbeitenden Rahmenelementes ohne Bildung von Kratzern in den Kontaktflächen des Rahmenelementes gewährleistet ist.

Konstruktiv und herstellungstechnisch besonders günstig ist es, wenn der mit dem Inneneck des Rahmenelementes in die Anlagestellung gelangende Bereich des Transportelementes an einem gegenüber einem Basisteil des Transportelementes verdrehbar gelagerten Drehteil gebildet ist.

Sofern dabei das Drehteil als auf das Basisteil aufgesteckte Hülse ausgebildet ist, ist ferner eine kompakte Bauweise des gesamten Transportelementes möglich.

Von Vorteil ist es ferner, wenn die Rückstelleinrichtung mindestens ein Federelement, vorzugsweise eine Zugfeder, aufweist, welches durch die Drehbewegung des Drehteiles gegenüber dem Basisteil eine rücktreibende Federkraft aufbaut.

Bei Einsatz eines Federelementes bietet es sich an, dass es in der Ausgangsdrehstellung unter einer Vorspannung steht. Hierdurch erfolgt eine selbsttätige Rückstellung des Drehteiles in seine Ausgangsstellung.

Nach einer Ausgestaltung der Erfindung ist es vorgesehen, dass sich das Federelement mit seinem einen Ende an dem Basisteil und seinem anderen Ende an einem Halteteil des Drehteiles abstützt. Es kann dadurch auf einfache Weise eine Verbindung zwischen dem Basisteil und dem Drehteil, also den beiden sich gegeneinander verdrehenden Teilen des Transportelementes geschaffen werden.

Dabei bietet es sich an, wenn das Halteteil das Drehteil an seinem freien Ende stirnseitig abdeckt. Dadurch kann der Innenbereich des Transportelementes beziehungsweise des Drehteiles vor Schmutz und mechanischen Einwirkungen von außen geschützt werden.

Darüber hinaus ist es von Vorteil, wenn das Federelement zwischen dem Halteteil und dem freien Ende des Basisteiles angeordnet ist. Dies ermöglicht eine geschützte Lage des Federelementes vor Einwirkungen und Einflüssen von außen.

Weiterhin weist das Halteteil mit Vorteil einen sich koaxial zum Drehteil in Richtung des Basisteiles erstreckenden Hülsenabschnitt auf, welcher als Führung für das Federelement dient. Dadurch kann eine ordnungsgemäße Funktionsweise des Federelementes sichergestellt werden.

In die gleiche Richtung zielt die Maßnahme, dass Fixiermittel zum Fixieren des Federelementes an dem Halteteil und dem Basisteil vorgesehen sind.

Eine weitere Ausgestaltung der Erfindung sieht vor, dass die Anschlagmittel jeweils durch ein an dem Drehteil angeordnetes Stiftelement und einen Vorsprung des Basisteiles gebildet sind, wobei sich der Vorsprung im Verdrehweg des Stiftelementes befindet. Dies ermöglicht eine kontrollierte Drehbewegung des Drehteiles über einen definierbaren Verdrehwinkel.

Mit Vorteil sollte das Stiftelement in Richtung des Gegenanschlages verstellbar sein. Auf diese Weise kann besonders einfach eine Justierung der Anschlagmittel, dass heißt eine Einstellung des Verdrehwinkels des Drehteiles gegenüber dem Basisteil, durchgeführt werden.

Weiterhin ist vorgesehen, dass das Stiftelement als Gewindestift oder Schraube ausgebildet ist. Dadurch ist eine einfache Herstellung der Anschlagmittel wie auch ein einfacher Austausch der Anschlagmittel möglich.

In die gleiche Richtung zielt die Maßnahme, dass der Vorsprung durch einen Gewindestift oder eine Schraube gebildet ist.

Nach einem weiteren Gedanken der Erfindung sind Sicherungsmittel vorgesehen, welche das Drehteil gegen ein Lösen von dem Basisteil axial sichern. Dadurch ist dauerhaft ein verliersicherer Betrieb des Transportelementes gewährleistet.

Von Vorteil ist es, wenn die Sicherungsmittel durch die Anschlagmittel gebildet sind. Durch diese Maßnahme kann eine axiale Lagesicherung des Drehteiles in einfacher, platzsparender und kostengünstiger Weise realisiert werden.

Das erfindungsgemäße Transportelement ist besonders für eine Fördereinrichtung für einen Rahmen, insbesondere Fenster- oder Türrahmen, in einer sogenannten Eckenputzmaschine geeignet.

### Ausführungsbeispiel

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

### Es zeigen:

- Figuren 1 bis 3: ein mögliches Ausführungsbeispiel des erfindungsgemäßen Transportelementes in Kontakt beziehungsweise Anlage mit einem Rahmenelement in Ausgangsstellung, Zwischenstellung und Bearbeitungsstellung während der Transportbewegung,
- Figur 4: das Transportelement gemäß der Figuren 1 bis 3 als Längsschnitt und
- Figur 5: das Transportelement gemäß der Figuren 1 bis 3 in verschiedenen Verdrehstellungen als Querschnittsdarstellung im Bereich von Anschlagmitteln.

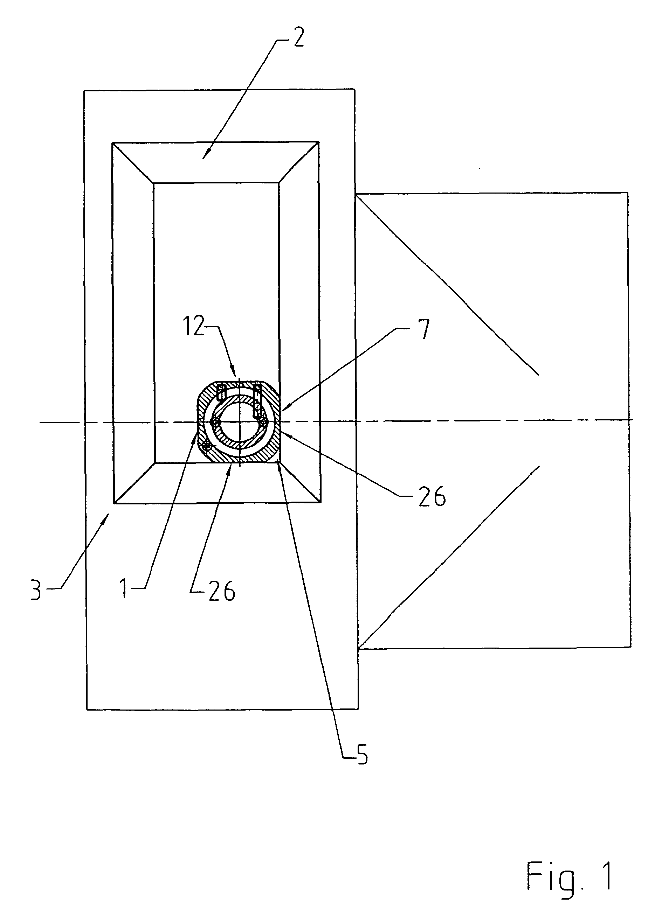

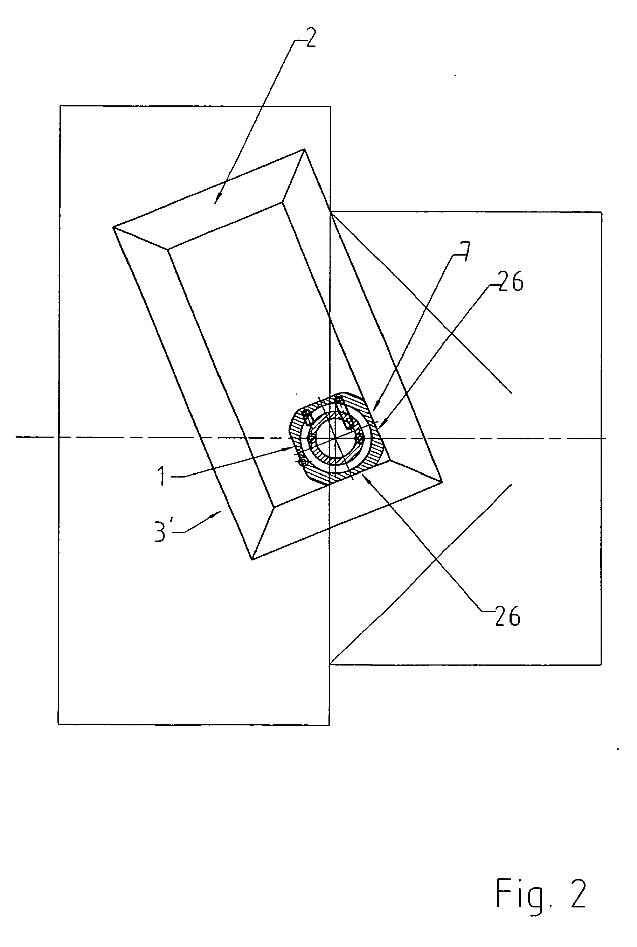

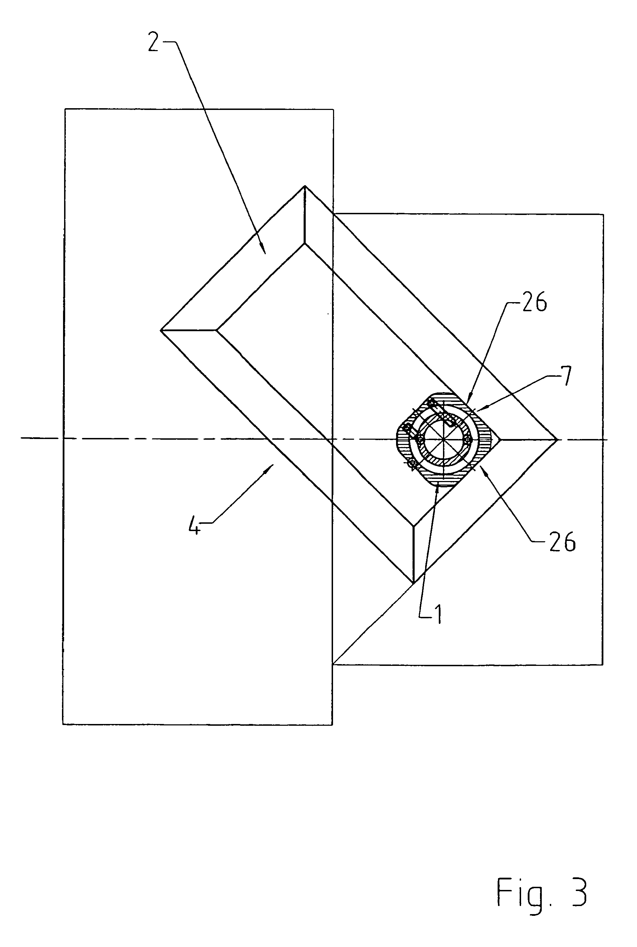

In den Figuren 1 bis 3 ist ein Transportelement 1 dargestellt zum Transportieren beziehungsweise Einziehen eines Rahmenelementes 2, wie beispielsweise eines Fenster- oder Türrahmens, in eine sogenannte Eckenputzvorrichtung zum Bearbeiten der Eckverbindungen des Rahmens. Das Rahmenelement 2 wird dabei beispielsweise linear von dem Transportelement 1 mittels einer Drehbewegung von einer Ausgangsstellung 3 über eine Zwischenstellung 3' in eine Endstellung 4 transportiert, wobei die Endstellung 4 beispielsweise eine Bearbeitungsstellung an einer Vorrichtung zum Bearbeiten des Rahmenelementes 2 sein kann.

Für die Transportbewegung gelangt das Transportelement 1 zur Anlage beziehungsweise in Kontakt an einem Inneneck 5 des Rahmenelementes 2. Diese Anlagestellung 7 bleibt, wie nachfolgend noch beschrieben, während der gesamten Transportbewegung des Rahmenelementes 2 beibehalten, dass heißt, das Transportelement 1 dreht sich während der Transportbewegung unter Beibehaltung der Anlagestellung 7 mit dem Rahmenelement 2 mit.

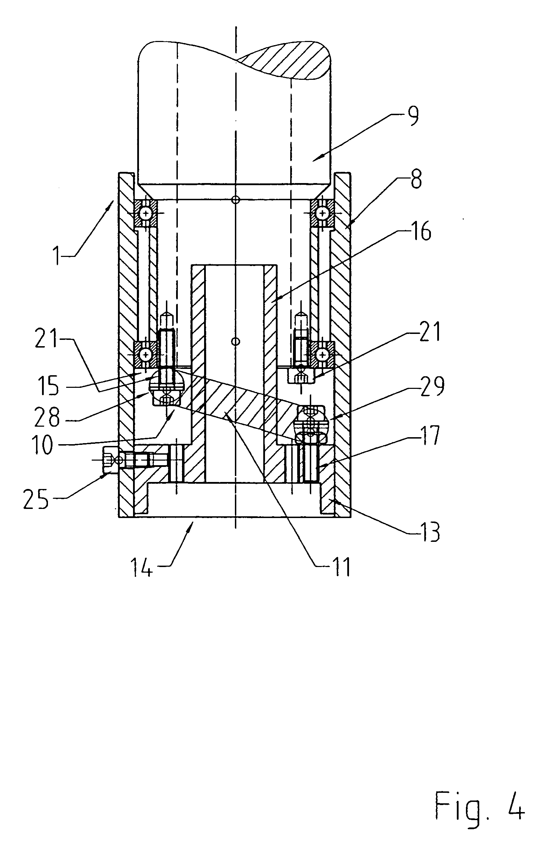

Wie insbesondere aus Figur 4 erkennbar, ist die mit dem Inneneck 5 des Rahmenelementes 2 in die Anlagestellung 7 gelangende Kontaktfläche 26 beziehungsweise Anlagebereich des Transportelementes 1 an einem Drehteil 8 gebildet, welcher gegenüber einem Basisteil 9 des Transportelementes 1 verdrehbar gelagert ist. Vorliegend ist das Drehteil als eine auf das Basisteil 9 aufgesteckte, im Querschnitt quadratische Hülse 8 ausgebildet, welche mit abgerundeten Kanten 6 versehen ist.

Weiterhin weist das Transportelement 1 eine Rückstelleinrichtung 10 auf, durch welche das Transportelement 1 bei einem Aufheben der Anlagestellung 7 mit dem Rahmenelement 2 in seine Ausgangsdrehstellung 12 zurückgedreht wird. Die Rückstelleinrichtung 10 enthält ein Federelement 11, vorliegend eine Zugfeder, welche durch die Drehbewegung des Drehteiles 8 gegenüber dem Basisteil 9 eine Federkraft aufbaut, und mittels dieser dann die Rückstellung des Transportelementes 1 beziehungsweise des Drehteiles 8 erfolgt. In der Ausgangsdrehstellung 12 ist das Federelement 11 bis auf seine Vorspannung entlastet.

Das Federelement 11 ist so angeordnet, dass es sich mit seinem einen Ende 28 an dem Basisteil 9 und seinem anderen Ende 29 an einem Halteteil 13 des Drehteiles 8 abstützt. Das Halteteil 13 ist dabei mit dem Drehteil 8 beziehungsweise der Hülse kraftschlüssig mittels Befestigungsmittel 25 verbunden. Das Halteteil 13 deckt damit das Drehteil 8 an seinem freien Ende 14 stirnseitig ab.

Das Halteteil 13 weist ferner einen sich koaxial zum Drehteil 8 in Richtung des Basisteils 9 erstreckenden Hülsenabschnitt 16 auf, welcher als Führung für das Federelement 11 dient. Das Federelement 11 selbst ist zwischen dem Halteteil 13 und dem freien Ende 15 des Basisteiles 9 angeordnet. Zum Fixieren des Federelementes 11 sind an dem Halteteil 13 und an dem Basisteil 9 Fixiermittel 17 vorgesehen, welche vorliegend als Schrauben ausgebildet sind.

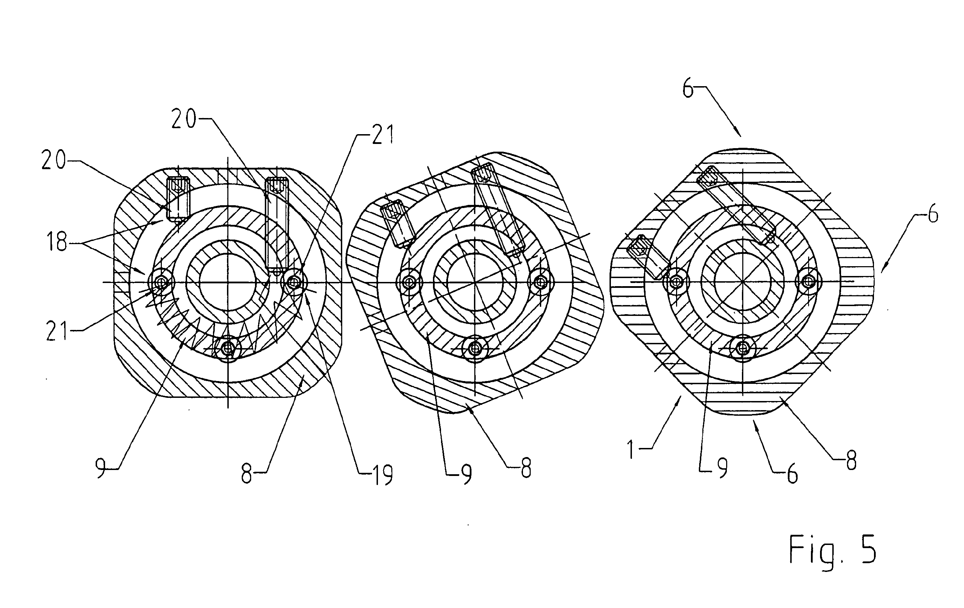

Wie insbesondere aus Figur 5 erkennbar ist, weist das Transportelement 1 Anschlagmittel 18, 19 auf, welche eine Verdrehbarkeit in die eine sowie in die andere Drehrichtung begrenzen. Die Anschlagmittel 18, 19 sind jeweils durch ein an dem Drehteil 8 angeordnetes Stiftelement 20 und einen Vorsprung 21 am Basisteil 9 gebildet, wobei sich der Vorsprung 21 im Verdrehweg des Stiftelementes 20 befindet. Zum Verändern der Begrenzungen für die Verdrehbarkeit des Transportelementes 1 ist das jeweilige Stiftelement 20 in Richtung des Vorsprunges 21 feststellbar ausgebildet. Dies wird dadurch erzielt, indem die Stiftelemente 20 als Gewindestifte vorliegen. Auch sind vorliegend die Vorsprünge 20 an dem Basisteil 9 jeweils durch eine Schraube, welche in das Basisteil 9 eingeschraubt ist, gebildet.

Schließlich weist das Transportelement 1 Sicherungsmittel auf, welche das Drehteil 8 gegen ein axiales Lösen von dem Basisteil 9 sichern. Die Sicherungsmittel sind vorliegend durch die Anschlagmittel 18, 19 beziehungsweise den Vorsprung 21 der Anschlagmittel 18, 19 gebildet, welcher vorliegend als in das Basisteil 9 eingeschraubte Schraube ausgebildet ist.

### Bezugszeichenliste

- 1 -: Transportelement
- 2 -: Rahmenelement
- 3 -: Ausgangsstellung
- 3'-: Zwischenstellung
- 4 -: Endstellung
- 5 -: Inneneck
- 6 -: Kante
- 7 -: Anlagestellung
- 8 -: Drehteil, Hülse
- 9 -: Basisteil
- 10 -: Rückstelleinrichtung
- 11 -: Federelement
- 12 -: Ausgangsdrehstellung
- 13 -: Halteteil
- 14 -: freies Ende der Hülse
- 15 -: freies Ende des Basisteils
- 16 -: Hülsenabschnitt
- 17 -: Fixiermittel
- 18 -: Anschlagmittel, Sicherungsmittel
- 19 -: Anschlagmittel, Sicherungsmittel
- 20 -: Stiftelement
- 21 -: Vorsprung
- 25 -: Befestigungsmittel
- 26 -: Anlagebereich, Kontaktfläche
- 28 -: Ende
- 29 -: Ende

## Patentansprüche

1. Transportelement (1) zum Transportieren, insbesondere zum Einziehen, eines Rahmenelementes (2), wie beispielsweise eines Fenster- oder Türrahmens, von einer Ausgangsstellung (3) unter Ausübung einer Drehbewegung in eine Endstellung (4), beispielsweise an einer Vorrichtung zum Bearbeiten des Rahmenelementes (2), wobei das Transportelement (1) mit seiner Kontaktfläche (26) bei der Transportbewegung zur Anlage an einer Inneneckfläche (5) des Rahmenelementes (2) gelangt, **dadurch gekennzeichnet, dass** das Transportelement frei drehbar an einem Basisteil (9) gehalten ist, derart, dass es bei der Transportbewegung des Rahmenelementes (2) unter Beibehaltung der Anlagestellung (7) mit dem Rahmenelement (2) mitdreht.

2. Transportelement nach Anspruch 1, **dadurch gekennzeichnet, dass** es einen kreisförmigen Querschnitt aufweist.

3. Transportelement nach Anspruch 1, **dadurch gekennzeichnet, dass** es einen im wesentlichen quadratischen Querschnitt aufweist, vorzugsweise mit abgerundeten Kanten (6).

4. Transportelement nach einem der vorhergehenden Ansprüche, **gekennzeichnet durch** eine Rückstelleinrichtung (10), **durch** welche es bei einem Aufheben der Anlagestellung (7) mit dem Rahmenelement (2) in seine Ausgangsdrehstellung (12) zurück gedreht wird.

5. Transportelement nach einem der vorhergehenden Ansprüche, **gekennzeichnet durch** Anschlagmittel (18, 19) zum Begrenzen des Verdrehwinkels des Transportelementes (1) in die eine und die andere Drehrichtung.

6. Transportelement nach einem der vorhergehenden Ansprüche, **dadurch gekennzeichnet, dass** es im Anlagebereich (26) mit dem Rahmenelement (2) eine im wesentlichen glatte Beschichtung oder dergleichen reibungsarme Oberfläche aufweist.

7. Transportelement nach einem der vorhergehenden Ansprüche, **dadurch gekennzeichnet, dass** der mit dem Inneneck (5) des Rahmenelementes (2) in die Anlagestellung (7) gelangende Bereich (26) des Transportelementes (1) an einem gegenüber einem Basisteil (9) des Transportelementes (1) verdrehbar gelagerten Drehteil (8) gebildet ist.

8. Transportelement nach Anspruch 7, **dadurch gekennzeichnet, dass** das Drehteil als auf das Basisteil (9) aufgesteckte Hülse (8) ausgebildet ist.

9. Transportelement nach einem der Ansprüche 4 bis 8, **dadurch gekennzeichnet, dass** die Rückstelleinrichtung (10) mindestens ein Federelement (11), vorzugsweise eine Zugfeder, aufweist, welches durch die Drehbewegung des Drehteiles (8) gegenüber dem Basisteil (9) eine rücktreibende Federkraft aufbaut.

10. Transportelement nach Anspruch 9, **dadurch gekennzeichnet, dass** das Federelement (11) in der Ausgangsdrehstellung (12) unter Vorspannung steht.

11. Transportelement nach Anspruch 9 oder 10, **dadurch gekennzeichnet, dass** das Federelement (11) sich mit seinem einen Ende (28) an dem Basisteil (9) und mit seinem anderen Ende (29) an einem Halteteil (13) des Drehteiles (8) abstützt.

12. Transportelement nach Anspruch 11, **dadurch gekennzeichnet, dass** das Halteteil (13) das Drehteil (8) an seinem freien Ende (14) stirnseitig abdeckt.

13. Transportelement nach einem der Ansprüche 11 oder 12, **dadurch gekennzeichnet, dass** das Federelement (11) zwischen dem Halteteil (13) und dem freien Ende (15) des Basisteils (9) angeordnet ist.

14. Transportelement nach einem der Ansprüche 11 bis 13, **dadurch gekennzeichnet, dass** das Halteteil (13) einen sich koaxial zum Drehteil (8) in Richtung des Basisteiles (9) erstreckenden Hülsenabschnitt (16) als Führung für das Federelement (11) aufweist.

15. Transportelement nach einem der Ansprüche 11 bis 14, **dadurch gekennzeichnet, dass** Fixiermittel (17) zum Fixieren des Federelementes (11) an dem Halteteil (13) und dem Basisteil (9) vorgesehen sind.

16. Transportelement nach einem der Ansprüche 5 bis 15, **dadurch gekennzeichnet, dass** die Anschlagmittel (18, 19) jeweils durch ein an dem Drehteil (8) angeordnetes Stiftelement (20) und einen Vorsprung (21) des Basisteiles (9) gebildet sind, wobei sich der Vorsprung (21) in dem Verdrehweg des Stiftelementes (20) befindet.

17. Transportelement nach Anspruch 16, **dadurch gekennzeichnet, dass** das Stiftelement (20) in Richtung des Vorsprunges (21) verstellbar ist.

18. Transportelement nach Anspruch 16 oder 17, **dadurch gekennzeichnet, dass** das Stiftelement (20) als Gewindestift oder Schraube ausgebildet ist.

19. Transportelement nach einem der Ansprüche 16 bis 18, **dadurch gekennzeichnet, dass** der Vorsprung (21) durch einen Gewindestift oder eine Schraube gebildet ist.

20. Transportelement nach einem der vorhergehenden Ansprüche, **dadurch gekennzeichnet, dass** Sicherungsmittel (18, 19) vorgesehen sind, welche das Drehteil (8) gegen ein Lösen von dem Basisteil (9) axial sichern.

21. Transportelement nach Anspruch 20, **dadurch gekennzeichnet, dass** die Sicherungsmittel durch die Anschlagmittel (18, 19) gebildet sind.

22. Bearbeitungsmaschine für Ecken von Rahmen (2), insbesondere Fenster- oder Türrahmen, mit einer Fördereinrichtung für den Rahmen (2), welche wenigstens ein Transportelement (1) nach einem der vorhergehenden Ansprüche aufweist.

23. Verfahren zum Transportieren, insbesondere zum Einziehen eines Rahmenelementes (2), wie beispielsweise eines Fenster- oder Türrahmens von einer Ausgangsstellung (3) unter Ausübung einer Drehbewegung in eine Endstellung (4), beispielsweise an einer Vorrichtung zum Bearbeiten des Rahmenelements (2), wobei ein Transportelement (1) mit seiner Kontaktfläche (26) bei der Transportbewegung zur Anlage an einer Inneneckfläche (5) des Rahmenelements (2) gelangt, **dadurch gekennzeichnet, dass** das Transportelement bei der Transportbewegung unter Beibehaltung der Anlagestellung (7) mit dem Rahmenelement (2) mitdreht.

## Claims

1. Transport element (1) for transporting, particularly for drawing in, a frame element (2), such as, for example, a window frame or door frame, from a starting setting (3) to an end setting (4) with application of a rotational movement, for example at a device for processing the frame element (2), wherein the transport element (1) comes into contact by its contact surface (26) with an internal corner surface (5) of the frame element (2) during the transport movement, **characterised in that** the transport element is mounted to be freely rotatable at a base part (9) in such a manner that during the transport movement of the frame element (2) it co-rotates with the frame element (2) while maintaining the contact setting (7).

2. Transport element according to claim 1, **characterised in that** it has a circular cross-section.

3. Transport element according to claim 1, **characterised in that** it has a substantially square cross-section, preferably with rounded edges (6).

4. Transport element according to one of the preceding claims, **characterised by** a restoring device (10) by which it is rotated back into its starting rotational setting (12) on removal of the contact setting (7) with the frame element (2).

5. Transport element according to one of the preceding claims, **characterised by** abutment means (18, 19) for limiting the angle of rotation of the transport element (1) in one and the other rotational direction.

6. Transport element according to one of the preceding claims, **characterised in that** it has a substantially smooth coating or like low-friction surface in the contact region (26) with the frame element (2).

7. Transport element according to one of the preceding claims, **characterised in that** the region (26), which comes into the contact setting (7) with the internal corner (5) of the frame element (2), of the transport element (1) is formed at a rotary part (8) mounted to be rotatable relative to a base part (9) of the transport element (1).

8. Transport element according to claim 7, **characterised in that** the rotary part is constructed as a sleeve (8) plugged onto the base part (9).

9. Transport element according to one of claims 4 to 8, **characterised in that** the restoring device (10) comprises at least one spring element (11), preferably a tension spring, which builds up a restoring spring force through the rotational movement of the rotary part (8) relative to the base part (9).

10. Transport element according to claim 9, **characterised in that** the spring element (11) is disposed under bias in the starting rotational setting (12).

11. Transport element according to claim 9 or 10, **characterised in that** the spring element (11) is supported by one end (28) thereof on the base part (9) and by the other end (29) thereof on the mounting part (13) of the rotary part (8).

12. Transport element according to claim 11, **characterised in that** the mounting part (13) covers the rotary part (8), at the free end (14) thereof, at the end face.

13. Transport element according to one of claims 11 and 12, **characterised in that** the spring element (11) is arranged between the mounting part (13) and the free end (15) of the base part (9).

14. Transport element according to one of claims 11 to 13, **characterised in that** the mounting part (13) has a sleeve section (16), which extends coaxially with the rotary part (8) in the direction of the base part (9), as guide for the spring element (11).

15. Transport element according to one of claims 11 to 14, **characterised in that** fixing means (17) for fixing the spring element (11) are provided at the mounting part (13) and the base part (9).

16. Transport element according to one of claims 5 to 15, **characterised in that** the abutment means (18, 19) are each formed by a respective pin element (20), which is arranged at the rotary part (8), and a respective projection (21) of the base part (9), wherein the projection (21) is disposed in the path of rotation of the pin element (20).

17. Transport element according to claim 16, **characterised in that** the pin element (20) is adjustable in the direction of the projection (21).

18. Transport element according to claim 16 or 17, **characterised in that** the pin element (20) is constructed as a threaded pin or screw.

19. Transport element according to one of claims 16 to 18, **characterised in that** the projection (21) is formed by a threaded pin or a screw.

20. Transport element according to one of the preceding claims, **characterised in that** securing means (18, 19) axially securing the rotary part (8) against detaching from the base part (9) are provided.

21. Transport element according to claim 20, **characterised in that** the securing means are formed by the abutment means (18, 19).

22. Processing machine for corners of frames (2), particularly window frames or door frames, with a conveying device for the frames (2), which device comprises at least one transport element (1) according to one of the preceding claims.

23. Method of transporting, particularly for drawing in a frame element (2), such as, for example, a window frame or door frame, from a starting position (3) to an end setting (4) with application of a rotational movement, for example at a device for processing the frame element (2), wherein a transport element (1) comes into contact by its contact surface (26) with an internal corner surface (5) of the frame element (2) during the transport movement, **characterised in that** the transport element during the transport movement co-rotates with the frame element (3) while maintaining the contact setting (7).

## Revendications

1. Élément de transport (1) pour transporter, en particulier pour introduire, un élément de cadre (2), tel qu'un cadre de fenêtre ou de porte, depuis une position initiale (3) moyennant un mouvement de rotation dans une position finale (4), par exemple sur un dispositif de finissage de l'élément de cadre (2), l'élément de transport (1) parvenant, au cours du mouvement de transport, avec sa surface de contact (26) en appui sur une surface d'angle intérieur (5) de l'élément de cadre (2), **caractérisé en ce que** l'élément de transport est maintenu librement rotatif sur une partie de base (9), de telle sorte que, pendant le mouvement de transport de l'élément de cadre (2), il tourne avec l'élément de cadre (2) tout en restant dans la position d'appui (7).

2. Élément de transport selon la revendication 1, **caractérisé en ce qu'**il possède une section circulaire.

3. Élément de transport selon la revendication 1, **caractérisé en ce qu'**il possède une section sensiblement carrée, de préférence avec des arêtes (6) arrondies.

4. Élément de transport selon l'une quelconque des revendications précédentes, **caractérisé par** un dispositif de rappel (10), par lequel il est ramené par rotation dans sa position de rotation initiale (12) lors de la suppression de la position d'appui (7) avec l'élément de cadre (2).

5. Élément de transport selon l'une quelconque des revendications précédentes, **caractérisé par** des moyens de butée (18, 19) pour limiter l'angle de rotation de l'élément de transport (1) dans l'une ou dans l'autre direction de rotation.

6. Élément de transport selon l'une quelconque des revendications précédentes, **caractérisé en ce que**, dans la zone d'appui (26) avec l'élément de cadre (2), il comporte un revêtement sensiblement lisse ou une surface similaire sans frottement.

7. Élément de transport selon l'une quelconque des revendications précédentes, **caractérisé en ce que** la zone (26) de l'élément de transport (1), parvenant dans la position d'appui (7) avec l'angle intérieur (5) de l'élément de cadre (2), est formée sur une partie rotative (8), montée rotative par rapport à une partie de base (9) de l'élément de transport (1).

8. Élément de transport selon la revendication 7, **caractérisé en ce que** la partie rotative est réalisée sous forme de manchon (8) enfiché sur la partie de base (9).

9. Élément de transport selon l'une quelconque des revendications 4 à 8, **caractérisé en ce que** le dispositif de rappel (10) comporte au moins un élément de ressort (11), de préférence un ressort de traction, lequel, sous l'effet du mouvement de rotation de la partie rotative (8) par rapport à la partie de base (9), génère une force de rappel.

10. Élément de transport selon la revendication 9, **caractérisé en ce que** l'élément de ressort (11) est sous précontrainte dans la position de rotation initiale (12).

11. Élément de transport selon la revendication 9 ou 10, **caractérisé en ce que** l'élément de ressort (11) prend appui avec l'une de ses extrémités (28) sur la partie de base (9) et avec son autre extrémité (29) sur une pièce de retenue (13) de la partie rotative (8).

12. Élément de transport selon la revendication 11, **caractérisé en ce que** la pièce de retenue (13) couvre la partie rotative (8) au niveau de son extrémité libre (14) du côté frontal.

13. Élément de transport selon la revendication 11 ou 12, **caractérisé en ce que** l'élément de ressort (11) est agencé entre la pièce de retenue (13) et l'extrémité libre (15) de la partie de base (9).

14. Élément de transport selon l'une quelconque des revendications 11 à 13, **caractérisé en ce que** la pièce de retenue (13) comporte une partie formant douille (16) qui s'étend coaxialement à la partie rotative (8) vers la partie de base (9) et qui fait fonction de guidage pour l'élément de ressort (11).

15. Élément de transport selon l'une quelconque des revendications 11 à 14, **caractérisé en ce que** des moyens de fixation (17) sont prévus sur la pièce de retenue (13) et la partie de base (9) pour fixer l'élément de ressort (11).

16. Élément de transport selon l'une quelconque des revendications 5 à 15, **caractérisé en ce que** les moyens de butée (18, 19) sont formés respectivement par une goupille (20) disposée sur la partie rotative (8) et par une saillie (21) de la partie de base (9), la saillie (21) se situant dans la trajectoire de rotation de la goupille (20).

17. Élément de transport selon la revendication 16, **caractérisé en ce que** la goupille (20) est réglable en direction de la saillie (21).

18. Élément de transport selon la revendication 16 ou 17, **caractérisé en ce que** la goupille (20) est réalisée sous forme de goupille filetée ou de vis.

19. Élément de transport selon l'une quelconque des revendications 16 à 18, **caractérisé en ce que** la saillie (21) est formée par une goupille filetée ou une vis.

20. Élément de transport selon l'une quelconque des revendications précédentes, **caractérisé en ce qu'**il est prévu des moyens de blocage (18, 19), qui bloquent la partie rotative (8) dans le sens axial pour l'empêcher de se désolidariser de la partie de base (9).

21. Élément de transport selon la revendication 20, **caractérisé en ce que** les moyens de blocage sont formés par les moyens de butée (18, 19).

22. Machine de finissage pour des angles de cadre (2), en particulier des cadres de fenêtre ou de porte, comportant un dispositif de transport pour le cadre (2), lequel comporte au moins un élément de transport (1) selon l'une des revendications précédentes.

23. Procédé de transport, en particulier pour introduire un élément de cadre (2), tel qu'un cadre de fenêtre ou de porte, depuis une position initiale (3) moyennant un mouvement de rotation dans une position finale (4), par exemple sur un dispositif de finissage de l'élément de cadre (2), un élément de transport (1) parvenant, au cours du mouvement de transport, avec sa surface de contact (26) en appui sur une surface d'angle intérieur (5) de l'élément de cadre (2), **caractérisé en ce que** l'élément de transport, pendant le mouvement de transport, tourne avec l'élément de cadre (2) tout en restant dans la position d'appui (7).
